# EUROPÄISCHE PATENTANMELDUNG

(11) **EP 0 988 884 A2**
(43) Veröffentlichungstag der Anmeldung: **29.03.2000**
(21) Anmeldenummer: 99117606.6
(22) Anmeldetag: 07.09.1999
(51) Int. Cl.: B01D 53/22, B01D 71/02, B01D 67/00, B01D 69/04

(54) **Verfahren zur Herstellung einer rohrförmigen Wasserstoffpermeationsmembran**

(30) Priorität: 22.09.1998 DE 19843306
(71) Anmelder: W.C. Heraeus GmbH & Co. KG, 63450 Hanau (DE)
(72) Erfinder: Baake, Reinhard, 63928 Krombach (DE); Lupton, David Francis, Dr., 63571 Gelnhausen (DE)
(74) Vertreter: Kühn, Hans-Christian

(57) **Zusammenfassung**

Es wird ein Verfahren zur Herstellung einer rohrförmigen Wasserstoffpermeationsmembran bereitgestellt, das durch folgende Schritte gekennzeichnet ist:
a. ein- oder zweiseitiges Beschichten eines plattenförmigen, mindestens ein Metall aus einer aus der vierten und fünften Nebengruppe des PSEs bestehenden Gruppe enthaltenden Grund-metall- oder Grundmetall-Legierungskörpers mit mindestens einer Palladium, Palladium-Legierung, Platin oder Platin-Legierung enthaltenden Beschichtung zu einem Beschichtungsformteil; und
b. Umformen des Beschichtungsformteils zu einer rohrförmigen Wasserstoffpermeationsmembran.

## Beschreibung

Die Erfindung betrifft ein Verfahren zur Herstellung einer rohrförmigen Wasserstoffpermeationsmembran, eine Wasserstoffpermeationsmembran und die Verwendung einer solchen.

Die Eigenart von Palladium sowie in erheblich geringerem Maße Platin, die rasche Permeation von Wasserstoff, aber auch von keinem anderen Gas durch eine Membran aus diesem Metall zu ermöglichen, ist seit langem bekannt. Auf diese Weise kann Wasserstoff von anderen Gasen getrennt werden.

Bereits seit mehreren Jahrzehnten werden Wasserstoffpermeationszellen angeboten, die zur Darstellung von Reinstwasserstoff verwendet werden. In diesen Zellen wird üblicherweise eine Palladium-Legierung als Membran eingesetzt. Besonders bewährt hat sich eine Konstruktion, die aus Röhrchen besteht, die an einem Ende in einer Lochplatte fixiert (beispielsweise durch Löten) und am anderen Ende zugeschweißt, jedoch nicht fixiert sind. Diese Konstruktion hat sich in der Praxis besonders bewährt, weil sich der Palladiumwerkstoff bei der Aufnahme von Wasserstoff ausdehnt, die bei der Fixierung der Röhrchen an beiden Enden bzw. beim Einspannen einer planaren Folie in einem steifen Rahmen zu einer wasserstoffbedingten Ausdehnung und somit zu einem Auftreten von Spannungen und Verformungen in der Palladiummembran führen würde, die rasch eine Rißbildung und Porosität zur Folge hätte.

US 5,215,729 offenbart u. a. eine Membran zur Extraktion von Wasserstoff aus Wasserstoff enthaltenden Fluidströmen, die im wesentlichen besteht aus einer ersten nicht porösen Schicht eines Refraktärmetalls und einer zweiten nicht porösen Schicht, die sich direkt auf der ersten Schicht befindet, wobei die zweite Schicht im wesentlichen besteht aus Palladium, Palladium-Legierungen, Platin oder Platin-Legierungen. Rohre mit kleinem Durchmesser sind mittels spezieller Sputtertechnik auf der Innen- und Außenseite mit einer entsprechenden zweiten Schicht beschichtet.

US 3,350,846 offenbart u. a. ein Sputter- und Aufdampfverfahren von Palladium auf Niob-, Vanadium- und Tantaloberflächen.

Diese aus dem Stand der Technik bekannten Verfahren lassen sich jedoch nur bei größeren Rohren (Rohrinnendurchmesser mindestens 25 mm) anwenden.

Weiterhin ist es bekannt, daß Platin sowohl galvanisch als auch stromlos aus einer Vielzahl verschiedener Bäder abgeschieden werden kann. Am häufigsten werden Bäder auf der Basis des Palladiumkomplexes, Palladiumdiaminodichlorid (Pd(NH₃)₂Cl₂) verwendet. Mit derartigen Bädern ist es jedoch kaum möglich, die Innenoberfläche von Rohren, insbesondere Rohren mit geringem Innendurchmesser (maximaler Rohrinnendurchmesser etwa 25 mm), aus leicht galvanisierbaren Materialien insbesondere innen zu beschichten. Die Probleme liegen sowohl in der Stoffzufuhr aus dem Elektrolyten im begrenzten Innenraum des Rohres als auch in der Einstellung gleichmäßiger elektrischer Felder für die Metallabscheidung im Rohr. Darüber hinaus sind die Refraktärmetalle selbst unter optimalen Bedingungen sehr schwer mittels galvanischer Methoden zu beschichten, da sich sowohl an Luft als auch in Kontakt mit wässerigen Lösungen eine dünne, festhaftende und nicht leitende Oberflächenoxidschicht bildet, die den unmittelbaren metallischen Kontakt zwischen Substrat und Beschichtung verhindert.

Bei der physikalischen Abscheidung aus der Dampfphase durch Aufdampfen oder Sputtern ergeben sich zwei Probleme. Erstens muß das Aufdampfmaterial oder das Sputtertarget mittig im Rohr positioniert werden und von dort durch Erhitzen bzw. durch Beschuß mit Edelgasionen auf die Rohrinnenseite übertragen werden. Derartige Methoden sind für große Rohre (Rohrinnendurchmessergröße ca. 100 mm) bekannt, nicht jedoch für kleinere Rohre. Zweitens muß die oxidische Sperrschicht auf der Oberfläche des Refraktärmetalls (Refraktärmetalle sind Metalle der 4. und 5. Nebengruppe des Periodensystems der Elemente) vor dem Beschichtungsprozeß entfernt werden. Derartige Schichten werden normalerweise durch "Absputtern" entfernt, indem die Oxidschicht durch Beschuß mit Edelgasionen abgetragen wird. Dieser Vorgang ist im Innenraum eines kleinen Rohres (Rohrinnendurchmesser kleiner als 25 mm) nicht möglich.

Aus oben genannten Gründen ist es mit aus dem Stand der Technik bekannten Verfahren nicht möglich, Rohre aus Refraktärmetallen mit geringem Innendurchmesser (Innendurchmesser kleiner als 25 mm) innen zufriedenstellend mit Pd, Pd-Legierung, Pt oder Pt-Legierung zu beschichten.

Aus dem vorgenannten ergibt sich das Problem, mit Hilfe eines neuartigen Verfahrens, einer neuartigen Membran und einer Verwendung die oben genannten Nachteile zumindest teilweise zu beseitigen. Das sich ergebende Problem liegt insbesondere darin, Rohre, die aus mindestens einem Metall der vierten und fünften Nebengruppe des Periodensystems der Elemente (PSE) bestehen und kleine Innendurchmesser (kleiner als 25 mm) aufweisen, die mit Palladium, Palladium-Legierung, Platin- oder Platin-Legierung zumindest auch auf der Innenseite des Rohres qualitativ zufriedenstellend beschichtet sind, bereitzustellen.

Dieses Problem wird erfindungsgemäß durch ein Verfahren nach Anspruch 1, eine Membran nach Anspruch 9 und eine Verwendung nach Anspruch 10 gelöst.

Beim erfindungsgemäßen Verfahren wird zunächst eine ein- oder zweiseitige Beschichtung eines plattenförmigen Grundmetall- oder Grundmetall-Legierungskörpers vorgenommen, wobei dieser mindestens ein Metall aus der vierten oder fünften Nebengruppe des PSEs enthält. Die Beschichtung enthält mindestens Palladium, mindestens eine Palladium-Legierung, Platin oder mindestens eine Platin-Legierung oder besteht vorzugsweise aus diesen Materialien.

Nach dem Beschichten wird das plattenförmige Beschichtungsformteil zu einer rohrförmigen Wasserstoffpermeationsmembran umgeformt.

Wesentlich beim erfindungsgemäßen Verfahren ist die Tatsache, daß zunächst eine Beschichtung obiger Zusammensetzung an einem noch nicht rohrförmigen, sondern plattenförmigen Körper obiger Metallzusammensetzung angebracht wird und erst im Anschluß daran eine entsprechende rohrförmige Umformung des Formteils stattfindet. Durch diese Reihenfolge ist gewährleistet, daß keine Schweißnähte in den Rohren vorhanden sind. Das ansonsten übliche Runden von beschichteten Bändern und das sich daran anschließende Schweißen, bei dem die Beschichtung in der Schweißzone verlorengeht, entfällt.

Auf diese elegante Art und Weise ist eine Herstellung von nahtlosen Rohren entsprechender Zusammensetzung möglich, die mit Palladium, einer Palladium-Legierung, Platin oder einer Platin-Legierung beschichtet sind, wobei der Innendurchmesser der Rohre nur wenige Millimeter betragen kann. In der Regel beträgt die Wandstärke der Rohre ca. 0,1 bis 10,0 mm.

Beim erfindungsgemäßen Verfahren ist es vorteilhaft, wenn das Beschichten mittels Walzplattieren, Sprengplattieren oder Diffusionsschweißen und das Umformen mittels Tiefziehen, Drücken oder Fließpressen durchgeführt wird, da sich diese Vorgehensweisen bewährt haben.

Vorteilhafterweise wird als Beschichtung PdAg23 verwendet, da diese Legierung eine besonders gute Kombination von Wasserstoffpermeabilität und Gefügestabilität aufweist. Darüber hinaus können auch andere Legierungen auf der Basis von Palladium, z. B. PdY10, eingesetzt werden.

Bei der Herstellung von Rohren mit besonders kleinem Innendurchmesser, insbesondere mit einem Innendurchmesser kleiner als 5 mm, ist es von besonderem Vorteil, nach der Umformung mindestens eine weitere Umformung, vorzugsweise lediglich eine weitere Umformung, mittels eines Ziehverfahrens durchzuführen, da auf diese Art und Weise ein größeres Längen-/Durchmesserverhältnis erzielt werden kann als durch alleiniges Tiefziehen, Drücken oder Fließpressen und in vielen Fällen darüberhinaus bezüglich der Rohrabmessungen eine bessere Reproduzierbarkeit gewährleistet ist.

In vorteilhafter Weise wird aus dem Beschichtungsformteil zur Umformung zu einer rohrförmigen Wasserstoffpermeationsmembran ein rondenförmiges Formstück ausgeschnitten, da die weitere Umformung zu einer rohrförmigen Membran verhältnismäßig wenige Arbeitsschritte erfordert und somit erhebliche Kosten einspart.

Schließlich ist es von Vorteil, daß die rohrförmige Membran einen maximalen Rohrinnendurchmesser von 25 mm, insbesondere von 10 mm, aufweist, da solche Rohre mit entsprechend kleinem Durchmesser ein günstiges Oberflächen-Volumen-Verhältnis bezüglich der Permeation aufweisen (große Oberfläche bei kleinem Volumen).

Die nach dem erfindungsgemäßen Verfahren hergestellten Membranen weisen die oben angegebenen überraschenden und vorteilhaften Eigenschaften, insbesondere eine für Permeationszwecke geeignete innere Rohrbeschichtung bei ausgezeichnetem Oberflächenvolumenverhältnis auf.

Entsprechendes gilt auch für die Verwendung einer nach dem erfindungsgemäßen Verfahren hergestellten Membran zur Isolierung und Reinigung von Wasserstoff in Wasserstoff enthaltenden Gasgemischen.

Die nachfolgenden Beispiele dienen zur Erläuterung der Erfindung.

### 1. Beispiel:

Eine Platte aus Niob (100 x 100 x 50 mm) wurde zwischen zwei Platten aus der Legierung PdAg23 (100 x 100 x 4 mm) gelegt, nachdem die Kontaktflächen der Platten sorgfältig gereinigt und mechanisch aufgerauht wurden. Das Niob hatte eine Härte von ca. HV 85, die PdAg-Legierung von ca. HV 95.

Die Platten wurden unter eine hydraulische Presse gelegt und mit einer Kraft von 500 - 2.000 kg/cm² gepreßt, wobei die Dickenumformung ca. 5- 15 % betrug.

Die so erzeugte Verbundplatte wurde auf eine Dicke von 10 mm gewalzt und anschließend eine zylindrische Tablette mit einem Durchmesser von 10 mm herausgeschnitten.

Die Tablette wurde in eine auf der unteren Seite geschlossene Matrize aus Hartmetall (Innendurchmesser 10,2 mm) gelegt und mit einem Hartmetallstempel (Außendurchmesser 9,4 mm) im Rückwärtsfließpreßverfahren zu einem Rohr verpreßt. Das Rohr hatte eine Länge von ca. 60 mm. Nach einer 30-minütigen Glühbehandlung bei T = +800° C unter Vakuum (p < 10⁻⁴ mbar) wurde das Rohr durch konventionelles Rohrziehen in mehreren Schritten auf einen Außendurchmesser von 3,5 mm und eine Gesamtwanddicke von 0,2 mm gezogen. Bei den gewählten Glühparametern wurde eine für die weitere Umformung ausreichende Entfestigung beider Werkstoffe erzielt; es wurde jedoch keine durch die Bildung eventueller intermetallischer Phasen verursachte Versprödung an der Grenzfläche zwischen Niob und der PdAg-Legierung festgestellt. Eine brauchbare Rohrlänge von 300 mm konnte erzielt werden. Metallographische Untersuchungen des Rohres zeigten eine fest haftende, geschlossene Schicht der PdAg-Legierung auf der Innen- und Außenseite des Niobkernmaterials auf. Die Beschichtung auf der Innenseite wies eine Dicke von ca. 0,015 mm, die auf der Außenseite eine Dicke von ca. 0,012 mm auf.

### 2. Beispiel:

Das im 1. Beispiel angegebene Verbundblech mit einer Dicke von 10 mm wurde bis an eine Dikke von 3 mm weitergewalzt. Aus dem Blech wurde eine Ronde mit einem Durchmesser von 100 mm geschnitten und 30 Minuten bei einer Temperatur von +800° C unter Vakuum (p < 10⁻⁴ mbar) geglüht.

Durch Tiefziehen in mehreren Schritten mit abgestuften Matrizen und Stempeln wurde ein Rohr mit einem Außendurchmesser von 26 mm und einem Innendurchmesser von 22 mm hergestellt. Nach Abtrennen der nicht brauchbaren Teile an den Enden hatte das Rohr eine Länge von ca. 130 mm.

Nach einer weiteren Glühbehandlung unter den oben angegebenen Bedingungen wurde das Rohr durch konventionelles Rohrziehen auf einen Außendurchmesser von 8 mm und einer Wandstärke von 0,5 mm gezogen. Eine brauchbare Rohrlänge von ca. 1,5 m konnte erzielt werden. Metallographische Untersuchungen des Rohrs zeigten eine fest haftende, geschlossene Schicht der PdAg-Legierung auf der Innen- und Außenseite des Niobkernmaterials. Die Beschichtung auf der Innenseite wies eine Stärke von etwa 0,038 mm, die auf der Außenseite eine Stärke von ca. 0,032 mm auf.

## Patentansprüche

1. Verfahren zur Herstellung einer rohrförmigen Wasserstoffpermeationsmembran gekennzeichnet durch folgende Schritte:
a. ein- oder zweiseitiges Beschichten eines plattenförmigen, mindestens ein Metall aus einer aus der vierten und fünften Nebengruppe des PSEs bestehenden Gruppe enthaltenden Grundmetall- oder Grundmetall-Legierungskörpers mit mindestens einer Palladium, mindestens eine Palladium-Legierung, Platin oder mindestens eine Platin-Legierung enthaltenden Beschichtung zu einem Beschichtungsformteil; und
b. Umformen des Beschichtungsformteils zu einer rohrförmigen Wasserstoffpermeationsmembran.

2. Verfahren nach Anspruch 1, dadurch gekennzeichnet, daß das Beschichten mittels Walzplattieren, Sprengplattieren oder Diffusionsschweißen durchgeführt wird.

3. Verfahren nach Anspruch 1 oder 2, dadurch gekennzeichnet, daß das Umformen mittels Tiefziehen, Drücken oder Fließpressen durchgeführt wird.

4. Verfahren nach einem der vorhergehenden Ansprüche, dadurch gekennzeichnet, daß als Beschichtung PdAg23 verwendet wird.

5. Verfahren nach einem der vorhergehenden Ansprüche, dadurch gekennzeichnet, daß nach der Umformung mindestens eine weitere Umformung mittels eines Ziehverfahrens durchgeführt wird.

6. Verfahren nach einem der vorhergehenden Ansprüche,dadurch gekennzeichnet, daß aus dem Beschichtungsformteil zur Umformung zu einer rohrförmigen Wasserstoffpermeationsmembran ein rondenförmiges Formstück ausgeschnitten wird.

7. Verfahren nach einem der vorhergehenden Ansprüche, dadurch gekennzeichnet, daß die rohrförmige Membran einen maximalen Rohrinnendurchmesser von 25 mm aufweist.

8. Verfahren nach einem der vorhergehenden Ansprüche, dadurch gekennzeichnet, daß die rohrförmige Membran einen maximalen Rohrinnendurchmesser von 10 mm aufweist.

9. Wasserstoffpermeationsmembran, hergestellt nach einem Verfahren nach einem der vorhergehenden Ansprüche.

10. Verwendung einer Membran nach Anspruch 8 zur Isolierung und Reinigung von Wasserstoff in Wasserstoff enthaltenden Gasgemischen.
